# EUROPÄISCHE PATENTSCHRIFT

(11) **EP 1 619 904 B1**
(45) Veröffentlichungstag und Bekanntmachung des Hinweises auf die Patenterteilung: **04.04.2007**
(21) Anmeldenummer: 04017432.8
(22) Anmeldetag: 23.07.2004
(51) Int. Cl.: H04Q 3/00, H04M 3/42

(54) **Verfahren zum Erbringen von Diensten in einem Telekommunikationsnetz sowie Telekommunikationsnetz und Netzwerkknoten hierfür**
Method for providing services in a telecommunication network, telecommunication network and network node therefor
Procédé pour la fourniture de services dans un réseau de télécommunications, réseau de télécommunications et noeud du réseau correspondants

(43) Veröffentlichungstag der Anmeldung: 25.01.2006
(73) Patentinhaber: Alcatel Lucent, 75008 Paris (FR)
(72) Erfinder: Oberle, Karsten, 68199 Mannheim (DE); Domschitz, Peter, 70191 Stuttgart (DE); Kessler, Marcus, Dr., 70329 Stuttgart (DE); Tomsu, Marco, 71254 Ditzingen (DE)
(74) Vertreter: Brose, Gerhard

(56) Entgegenhaltungen:
- US-A- 5 270 701
- US-A1- 2004 071 147
- US-B1- 6 393 481
- MARSHALL I W ET AL: "ADAPTIVE MANAGEMENT OF AN ACTIVE SERVICE NETWORK" BT TECHNOLOGY JOURNAL, BT LABORATORIES, GB, Bd. 18, Nr. 4, Oktober 2000 (2000-10), Seiten 78-84, XP000969892 ISSN: 1358-3948

## Beschreibung

Die Erfindung betrifft ein Verfahren zum Erbringen von Diensten in einem Telekommunikationsnetz nach dem Oberbegriff des Anspruchs 1, ein Telekommunikationsnetz nach dem Oberbegriff des Anspruchs 2 sowie Netzwerkknoten nach dem Oberbegriff des Anspruchs 3.

Die sogenannten Next Generation Networks (NGN) bieten dem Nutzer eine rasant anwachsende Fülle an Anwendungen und Dienstleistungen, wie z.B. Dienste für die Sprachtelefonie, Multimediadienste oder Virtual Private Networks (VPN). Um diese Dienste und Anwendungen flexibel und kostengünstig anbieten zu können, wurde im Architekturkonzept der Next Generation Networks eine klare Trennung der Ebene der Dienste und Anwendungen von der Transportebene eingeführt. Die Kontrolle im Next Generation Network wird dabei durch eine gemeinsame, vereinheitlichte und flexible Kontrollumgebung übernommen, die eine Vielzahl von Diensten und Anwendungen mit einer Vielzahl von Transportmethoden kombiniert. Durch diese Architektur wird der Netzbetreiber in die Lage versetzt, die jeweils geeignete Kombination aus Dienstkontrollsoftware und Transportmethode auszuwählen. Dienste und Anwendungen wiederum werden in separaten, dezentralen Knoten im Netz zur Verfügung gestellt.

Bei einer geplanten Einführung neuer Dienste und Anwendungen muß entweder ein Upgrade der Software in allen Netzwerkknoten durchgeführt werden, oder die entsprechenden funktionalen Elemente im Netz oder sogar sämtliche Netzwerkknoten müssen ersetzt werden. Aufgrund von Beschränkungen der Hardware ist ein Upgrade der Software der Netzwerkknoten allerdings nicht immer möglich. Ein Ersatz sämtlicher Netzwerkknoten ist zwar immer machbar, aber durch die damit einhergehenden immensen Kosten v.a. während der Einführungsphase neuer Dienste und Anwendungen nicht wirtschaftlich, was natürlich eine große Hürde für die Einführung von solchen neuen Diensten und Anwendungen darstellt.

Im US-Patent 6374362 B1 wird ein Verfahren beschrieben, bei dem Netzwerkknoten auf einen zentralen Netzwerkknoten zugreifen können, um verteilte Prozesse, die im Ablauf bestimmter Anwendungsprogramme benötigt werden, aufrufen zu können. Bei diesem Verfahren sind zwar bei Einführung neuer Anwendungen und Dienste Änderungen nur am zentralen Netzwerkknoten nötig, allerdings führt ein zentrales Verfahren wie dieses auch zu einer einseitig starken Belastung des zentralen Netzwerkknotens und bietet zudem keinerlei Ausfallsicherheit durch Redundanz.

In der US-Patentanmeldung 0071147 A1 wird ein Verfahren beschrieben, bei dem Knoten in einem Kommunikationsnetzwerk Anfragen zur Erbringung eines Dienstes auf Grund statistischer Entscheidungsprvzesse an andere Knoten weiterleiten können, die allerdings nicht notwendigerweise den gewünschten Dienst erbringen können. Zudem kann ein Knoten eine Anfrage zum Erbringen eines Dienstes zusammen mit einer Methode zum Erbringen dieses Dienstes an einen anderen Knoten weiterleiten, so dass dieser andere Knoten in die Lage versetzt wird, diesen Dienst zu erbringen.

In der US-Patentschrift 5287537 wird ein verteiltes Computersystem zur Nutzung von Ressourcen beschrieben, das wiederum aus einer Vielzahl von digitalen Computersystemen besteht. Ein digitales Computersystem überprüft, ob es eine angeforderte Ressource zur Nutzung bereitstellen kann. Falls dies nicht der Fall ist, überprüft das digitale Computersystem, ob ein anderes digitales Computersystem die angeforderte Ressource zur Verfügung stellen kann, und leitet ggf. die Anforderung an ein anderes digitales Computersystem weiter.

Der Erfindung liegt die Aufgabe zugrunde, an der oben beschriebenen Situation Abhilfe zu schaffen.

Diese Aufgabe wird erfindungsgemäß gelöst durch ein Verfahren zum Erbringen von Diensten in einem Telekommunikationsnetz nach der Lehre des Anspruchs 1, ein Telekommunikationsnetz nach der Lehre des Anspruchs 2 sowie Netzwerkknoten nach der Lehrer des Anspruchs 3.

Die grundlegende Idee der Erfindung besteht darin, eine Einführung eines neuen Dienstes oder einer neuen Anwendung dadurch zu bewerkstelligen, daß ein Upgrade der entsprechenden Software nur noch in einem oder einigen Netzwerkknoten durchgeführt werden muß, oder die neue Software sich nur in einem neu hinzugefügten Netzwerkknoten befindet, die neuen Dienste und Anwendungen dabei aber trotzdem von allen vorhandenen Netzwerkknoten genutzt werden können. Man spricht in diesem Fall davon, daß die Dienste und Anwendungen in einem sogenannten virtuellen Pool sämtlichen Netzwerkknoten innerhalb eines Clusters von Netzwerkknoten zur Verfügung stehen. Falls ein Netzwerkknoten einen Dienst oder eine Anwendung benötigt, dieser bzw. diese aber nicht lokal in ihm implementiert ist, wird die benötigte Software zum Ausführen des Dienstes oder der Anwendung dem Netzwerkknoten installiert, falls dieser programmierbar ist. Auf diese Art und Weise haben sämtliche Netzwerkknoten innerhalb eines Clusters Zugriff auf alle Dienste und Anwendungen, die innerhalb des Clusters vorhanden sind. Mittels einer Software, die z.B. in der allgemein bekannten Middleware-Technologie ausgeführt sein kann, und die in allen Netzwerkknoten innerhalb des Clusters installiert wird, können die in einzelnen Netzwerkknoten implementierten Dienste und Anwendungen in dem virtuellen Pool zur Verfügung gestellt werden. Der Kontrolleinheit gegenüber erscheinen alle Netzwerkknoten gleichermaßen mit allen im virtuellen Pool zur Verfügung stehenden Diensten und Anwendungen ausgestattet. Die genaue Schilderung, wie die Informationen darüber, in welchen der Netzwerkknoten welche Dienste oder Anwendungen implementiert sind, den einzelnen Netzwerkknoten zur Verfügung gestellt werden, kann dabei der Detailbeschreibung entnommen werden.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnung weiter erläutert.

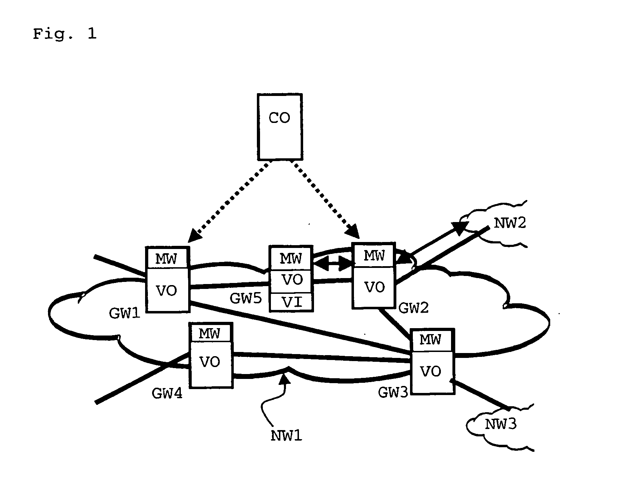

Figur 1 zeigt eine beispielhafte Netzwerkumgebung, in der die Erfindung implementiert werden kann.

Die in Figur 1 dargestellte Netzwerkumgebung beinhaltet einen Cluster von erfindungsgemäßen Netzwerkknoten GW1 bis GW5 in einem erfindungsgemäßen Telekommunikationsnetz NW1, eine Kontrolleinheit CO sowie exemplarisch zwei weitere Telekommunikationsnetze NW2 und NW3. Die Netzwerkknoten GW1 bis GW5 des Clusters sind entweder direkt oder über Netzwerkknoten des Clusters miteinander verbunden, zudem weisen die Netzwerkknoten GW1 bis GW4 Verbindungen zu weiteren Telekommunikationsnetzen auf, von denen die zwei Telekommunikationsnetze NW2 und NW3 exemplarisch dargestellt sind. Die Kontrolleinheit CO befindet sich an einer beliebigen Stelle innerhalb der Netzwerkumgebung und ist mit allen Netzwerkknoten GW1 bis GW5 des Clusters verbunden, wobei aus Gründen der Übersicht nur die Verbindungen zu den Netzwerkknoten GW1 und GW2 eingezeichnet sind.

Das erfindungsgemäße Telekommunikationsnetz NW1 besteht dabei aus einem beliebigen Netz, wie z.B. dem Internet oder einem sogenannten Local Area Network (LAN), in das zusätzlich noch die Netzwerkknoten GW1 bis GW5 implementiert sind.

Die erfindungsgemäßen Netzwerkknoten GW1 bis GW5 können einfach Rechner sein, die z.B. als Web Server für bestimmte Dienste fungieren, aber auch spezielle Netzwerkfunktionen umfassen, wie z.B. die von einem Router, Switch oder Gateway. Die Netzwerkknoten GW1 bis GW5 weisen zudem sowohl Mittel zum Speichern von Daten, wie z.B. Random Access Memories (RAMs), Festplatten, oder ähnliches, als auch Mittel zum Erbringen von Diensten oder Anwendungen, wie z.B. Videodiensten auf. Diese Daten können aus Video- und/oder Audiodaten, wie z.B. MPEG-Daten (MPEG=Moving Picture Experts Group) oder ähnlichen Daten, aber auch aus Programmdaten, wie z.B. einer Middleware oder einem Programm zum Kodieren oder Dekodieren von Daten, bestehen. Für die Kommunikation innerhalb des Telekommunikationsnetzes NW1 und mit weiteren Telekommunikationsnetzen NW2 und NW3 weisen die Netzwerkknoten GW1 bis GW5 Mittel sowohl zum Verarbeiten und Speichern, als auch zum Empfangen und/oder Versenden von Daten auf. In der in Figur 1 dargestellten beispielhaften Netzwerkumgebung sind in allen Netzwerkknoten GW1 bis GW5 heutzutage standardmäßig vorhandene Sprachdienste implementiert, die mit VO gekennzeichnet sind. Im Netzwerkknoten GW5 steht zudem noch ein Videodienst VI zur Verfügung. Die im Beispiel beschriebene Implementierung von Sprach- und Videodiensten in den Netzwerkknoten GW1 bis GW5 dient dabei nur der Erläuterung der Erfindung, und die Erfindung ist keinesfalls auf diese Dienste beschränkt.

In allen erfindungsgemäßen Netzwerkknoten GW1 bis GW5 ist eine Software zur Dienstunterstützung implementiert, die in Middleware-Technologie ausgeführt ist und im folgenden kurz Middleware MW genannt wird, mit deren Hilfe die Detektion von Diensten und Anwendungen im Cluster ermöglicht und die Ausführung von diesen Diensten und Anwendungen entsprechend der Verfügbarkeit bzw. Auslastung in den verschiedenen Netzwerkknoten GW1 bis GW5 veranlaßt wird. Alle Netzwerkknoten GW1 bis GW5 haben also durch die Middleware MW Kenntnis über die Realisierung und Lokalisierung sämtlicher Dienste und Anwendungen innerhalb des Clusters. Die Middleware MW ist dabei generisch, d.h. unabhängig von den Diensten und Anwendungen, die in den Netzwerkknoten implementiert sind. Durch die Middleware MW weist jeder Netzwerkknoten GW1 bis GW5 Mittel auf, um zu überprüfen, ob ein anderer der Netzwerkknoten GW1 bis GW5 einen bestimmten Dienst oder eine bestimmte Anwendung erbringen kann, den oder die der Netzwerkknoten selbst nicht erbringen kann. Die Informationen darüber, in welchen Netzwerkknoten GW1 bis GW5 welche Dienste oder Anwendungen implementiert sind, können dabei z.B. in unter der Verwaltung der Middleware MW stehenden Datensätzen in den einzelnen Netzwerkknoten GW1 bis GW5 gespeichert sein. Alternativ dazu können die Netzwerkknoten GW1 bis GW5 auch durch über die Middleware MW gesteuerte Anfragen an andere der Netzwerkknoten GW1 bis GW5 ermitteln, ob in einem der anderen Netzwerkknoten der gewünschte Dienst oder die gewünschte Anwendung implementiert ist oder ob dort etwa nach dem Prinzip der verteilten Listen Informationen vorliegen, die angeben, in welchen der Netzwerkknoten GW1 bis GW5 entweder der gesuchte Dienst oder die gesuchte Anwendung implementiert ist oder Informationen über den Speicherort des gesuchten Dienstes oder der gesuchten Anwendung vorliegen.

Bei dem erfindungsgemäßen Verfahren weist jeder Netzwerkknoten GW1 bis GW5 Mittel auf, um von anderen Netzwerkelementen innerhalb der Netzwerkumgebung, wie z.B. den Netzwerkknoten GW1 bis GW5 oder einem Medienserver, Programme zum Ausführen von Diensten und/oder Anwendungen anzufordern, die in dem Netzwerkknoten nicht implementiert sind und um diese Programme nach Erhalt zu installieren und bei Bedarf auszuführen.

Wie in Figur 1 dargestellt, erfolgt die Steuerung der Vermittlungsfunktionalität und der Dienste und Anwendungen in allen Netzwerkknoten GW1 bis GW5 im Bsp. zentral in der Kontrolleinheit CO und ist damit separiert von den Netzwerkknoten GW1 bis GW5. Um diese Aufgabe auszuführen, weist die Kontrolleinheit CO Mittel zum Empfangen, Senden, Speichern und Bearbeiten von Daten wie z.B. Kontrollprotokollen auf. Eine solche Kontrolleinheit kann z.B. ein sogenannter SoftSwitch sein und als Kontrollprotokoll zwischen der Kontrolleinheit CO und den Netzwerkknoten GW1 bis GW5 kann z.B. H.248/MEGACO verwendet werden. Der Kontrolleinheit gegenüber erscheint der virtuelle Pool von Diensten und Anwendungen transparent, d.h. die Kontrolleinheit steuert zwar die Ausführung der Dienste und Anwendungen, allerdings erfolgt die Kontrolle darüber, in welchen der Netzwerkknoten GW1 bis GW5 diese ausgeführt werden, eigenständig durch die in den Netzwerkknoten GW1 bis GW5 implementierte Middleware MW.

Die Steuerung der Vermittlungsfunktionalität und der Dienste und Anwendungen in den Netzwerkknoten GW1 bis GW5 muß allerdings nicht zwangsläufig über die zentrale Kontrolleinheit CO erfolgen, sondern könnte auch dezentral in den einzelnen Netzwerkknoten GW1 bis GW5 durchgeführt werden z.B. wenn man dort die Funktionalität eines sogenannten SIP-Proxy (SIP = Session Initiation Protocol) implementieren würde.

Die von den Netzwerkknoten GW2 und GW3 aus erreichbaren Telekommunikationsnetze NW2 und NW3 können jedwedes Kommunikationsnetz sowohl in mobiler Ausführung, wie z.B. ein GSM-Netz (GSM = Global System for Mobile Communication) als auch in Festnetzausführung, wie z.B. das Internet, repräsentieren.

Bei dem erfindungsgemäßen Verfahren werden Anfragen zum Erbringen eines Dienstes oder einer Anwendung an einen der Netzwerkknoten GW1 bis GW5 gesendet. Wenn derjenige Netzwerkknoten, der diese Anfrage erhalten hat, nicht derart ausgestattet ist, daß er diesen Dienst oder die Anwendung erbringen kann, dann überprüft dieser Netzwerkknoten mit Hilfe der Middleware MW daraufhin, ob ein anderer der Netzwerkknoten GW1 bis GW5 in der Lage ist, den Dienst oder die Anwendung zu erbringen. Um solche Überprüfungen durchführen zu können, besitzen alle Netzwerkknoten GW1 bis GW5 eine Dienstunterstützungsschicht, die durch die Implementierung einer generischen Middleware MW in allen Netzwerkknoten GW1 bis GW5 realisiert wurde.

Bei dem erfindungsgemäßen Verfahren kann derjenige der Netzwerkknoten GW1 bis GW5, der eine Anfrage zum Erbringen eines Dienstes oder einer Anwendung erhalten hat und nicht derart ausgestattet ist, daß er diesen Dienst oder diese Anwendung erbringen kann, aber Mittel zum Installieren von Programmen aufweist, überprüfen, ob er von einem anderen Netzwerkelement innerhalb der Netzwerkumgebung, wie z.B. einem der Netzwerkknoten GW1 bis GW5 oder einem Medienserver das Programm zum Ausführen des Dienstes oder der Anwendung herunterladen kann. Falls dieses möglich sein sollte, lädt der Netzwerkknoten dieses Programm für die Kontrolleinheit transparent herunter und erbringt den gewünschten Dienst oder die gewünschte Anwendung.

## Patentansprüche

1. Verfahren zum Erbringen eines Dienstes oder einer Anwendung in einer Netzwerkumgebung mit Netzwerkelementen, die ein Telekommunikationsnetz (NW1) beinhaltet, das mindestens zwei Netzwerkknoten (GW1-GW5) zum Erbringen von Diensten oder Anwendungen aufweist, die alle mit einer gemeinsamen Schicht zur Dienstunterstützung ausgestattet sind, **dadurch gekennzeichnet, daß**, wenn ein bestimmter Netzwerkknoten (GW1-GW5) nicht derart ausgestattet ist, daß er einen bestimmten Dienst oder eine bestimmte Anwendung erbringen kann, aber Mittel zum Installieren von Programmen aufweist, dieser Netzwerkknoten (GW1-GW5) überprüft, ob er von einem anderen Netzwerkelement innerhalb der Netzwerkumgebung das Programm zum Ausführen dieses Dienstes oder dieser Anwendung herunterladen kann und wenn möglich dieses Programm herunterlädt und diesen Dienst oder diese Anwendung erbringt.

2. Telekommunikationsnetz (NW1) mit Netzwerkknoten (GW1-GW5) zum Erbringen von Diensten oder Anwendungen, **dadurch gekennzeichnet, daß** ein oder mehrere dieser Netzwerkknoten (GW1-GW5) Mittel aufweisen, um zu überprüfen, ob sie von einem anderen Netzwerkelement innerhalb einer Netzwerkumgebung, die das Telekommunikationsnetz (NW1) beinhaltet, ein Programm zum Ausführen eines Dienstes oder einer Anwendung, den oder die sie selbst nicht erbringen können, herunterladen können, um dieses Programm herunterzuladen und um diesen Dienst oder diese Anwendung zu erbringen.

3. Netzwerkknoten (GW1-GW5) eines Telekommunikationsnetzes (NW1) zur Erbringung von Diensten oder Anwendungen, **dadurch gekennzeichnet, daß** dieser Netzwerkknoten (GW1-GW5) Mittel aufweist, um zu überprüfen, ob von einem anderen Netzwerkelement innerhalb einer Netzwerkumgebung, die das Telekommunikationsnetz (NW1) beinhaltet, ein Programm zum Ausführen eines Dienstes oder einer Anwendung, den oder die dieser Netzwerkknoten selbst nicht erbringen kann, herunterladen kann, um dieses Programm herunterzuladen, und um diesen Dienst oder diese Anwendung zu erbringen.

## Claims

1. A method for performing a service or application in a network environment with network elements, which network environment contains a telecommunication network (NW1) that has at least two network nodes (GW1-GW5) for performing services or applications, all these nodes being equipped with a common layer for service support, **characterized in that**, if a particular network node (GW1-GW5) is not equipped such that it can perform a particular service or application, but does have means of installing programs, this network node (GW1-GW5) checks whether it can download the program to execute this service or application from another network element within the network environment, and if possible downloads this program and performs this service or application.

2. Telecommunication network (NW1) with network nodes (GW1-GW5) for performing services or applications, **characterized in that** one or more of these network nodes (GW1-GW5) have means of checking whether they can download from another network element within a network environment, which contains the telecommunication network (NW1), a program to execute a service or application which they cannot themselves perform, in order to download this program and to perform this service or application.

3. Network node (GW1-GW5) of a telecommunication network (NW1) for performing services or applications,
**characterized in that** this network node (GW1-GW5) has means of checking whether it can download from another network element within a network environment, which contains the telecommunication network (NW1), a program to execute a service or application which this network node itself cannot perform, in order to download this program and to perform this service or application.

## Revendications

1. Procédé pour la fourniture d'un service ou d'une application dans un voisinage réseau avec des éléments de réseau, lequel voisinage comprend un réseau de télécommunication (NW1) présentant au moins deux noeuds de réseau (GW1-GW5) pour fournir des services ou des applications, lesquels sont tous équipés d'une couche commune pour l'assistance aux services, **caractérisé en ce que** lorsqu'un noeud de réseau en particulier (GW1-GW5) n'est pas équipé de manière à pouvoir fournir un certain service ou une certaine application mais présente des moyens permettant l'installation de programmes, ce même noeud de réseau (GW1-GW5) vérifie s'il peut, à partir d'un autre élément de réseau compris dans le voisinage réseau, télécharger le programme permettant l'exécution de ce service ou de cette application, et, si cela est possible, télécharge ce programme et fournit ce service ou cette application.

2. Réseau de télécommunication (NW1) avec des noeuds de réseau (GW1 -GW5) pour la fourniture de services ou d'applications, **caractérisé en ce qu'**un ou plusieurs de ces noeuds de réseau (GW1-GW5) présente(nt) des moyens permettant de vérifier s'ils peuvent, à partir d'un autre élément de réseau compris dans le voisinage réseau incluant le réseau de télécommunication (NW1), télécharger un programme permettant d'exécuter un service ou une application qu'eux-mêmes ne peuvent pas fournir, afin de télécharger ce programme et de fournir ce service ou cette application.

3. Noeud de réseau (GW1-GW5) d'un réseau de télécommunication (NW1) pour la fourniture de services ou d'applications, **caractérisé en ce que** ce noeud de réseau (GWI-GW5) présente des moyens permettant de vérifier s'il peut, à partir d'un autre élément de réseau compris dans le voisinage réseau incluant le réseau de télécommunication (NW1), télécharger un programme permettant d'exécuter un service ou une application que lui-même ne peut pas fournir, afin de télécharger ce programme et de fournir ce service ou cette application.
